Europäisches Patentamt

European Patent Office

Office européen des brevets

(19)

(11) Numéro de publication: **0 384 846 B1**

(12) **FASCICULE DE BREVET EUROPEEN**

(45) Date de publication de fascicule du brevet: **28.09.94**　(51) Int. Cl.5: **C02F 11/00**, C04B 40/00

(21) Numéro de dépôt: **90400503.0**

(22) Date de dépôt: **23.02.90**

(54) **Procédé de fixation chimique de boue aqueuse liquide par mise en oeuvre d'une réaction pouzzolanique.**

(30) Priorité: **24.02.89 FR 8902430**

(43) Date de publication de la demande:
**29.08.90 Bulletin 90/35**

(45) Mention de la délivrance du brevet:
**28.09.94 Bulletin 94/39**

(84) Etats contractants désignés:
**AT BE CH DE ES GB IT LI NL SE**

(56) Documents cités:
**DE-A- 2 456 225**

**PATENT ABSTRACTS OF JAPAN, vol. 4, no. 46 (C-6)[528], 10 avril 1980, page 3 C6; & JP-A-55 18 210 (NIPPON CEMENT K.K.) 08-02-1980**

(73) Titulaire: **AGENCE DE L'ENVIRONNEMENT ET DE LA MAITRISE DE L'ENERGIE**
**27 rue Louis Vicat**
**F-75015 Paris (FR)**

(72) Inventeur: **Colin, François**
**125 Rue Léonard Bourcier**
**F-45000 Nancy (FR)**

(74) Mandataire: **CABINET BONNET-THIRION**
**95 Boulevard Beaumarchais**
**F-75003 Paris (FR)**

Rank Xerox (UK) Business Services
(3.10/3.09/3.3.3)

## Description

L'invention se rapporte à un procédé de fixation de boue aqueuse de faible teneur en matière sèche par réaction pouzzolanique.

Lors de leur mise en décharge, les boues résiduaires contenant des produits toxiques dans leur phase solide, en particulier des métaux lourds indésirables, présentent un risque pour l'environnement du fait que cette phase solide se trouve très finement dispersée et présente donc une interface très importante avec le milieu extérieur, ce qui ne peut que favoriser amplement le passage en solution d'espèces polluantes toxiques du fait de phénomènes de dissolution physique, hydrolyse, biodégradation, etc... Par ailleurs ces boues comportent une phase liquide aqueuse interstitielle elle-même plus ou moins contaminée qui en constitue la fraction la plus mobile.

On remédie au problème de pollution de l'environnement en fixant ces boues à l'aide de divers procédés dits de fixation des boues. Parmi ceux-ci on distingue les procédés mettant en oeuvre des réactions de solubilisation des métaux par formation de complexes puis réaction de ces derniers avec un liant hydraulique et/ou un durcisseur, comme décrit par exemple dans EP-A-0226787 et les procédés mettant en oeuvre des réactions pouzzolaniques, comme décrit par exemple dans DE-A 2456225. Les premiers procédés nécessitent plusieurs stades opératoires et des quantités importantes de réactifs dont certains sont coûteux. Pour ce qui est des réactions pouzzolaniques, celles-ci s'appliquent plutôt à des milieux relativement chargés en matières solides.

On définit le pouvoir pouzzolanique d'un matériau minéral comme étant l'aptitude de fixer de la chaux à température ordinaire pour donner un liant hydraulique, c'est-à-dire un composé capable de faire prise en présence d'eau et donc de durcir et de se solidifier.

Cet effet est très lent et il débute au bout de 2 ou 3 jours après réalisation du mélange. L'évolution du matériau au cours du temps est très lente et il peut falloir plusieurs années pour attendre la résistance mécanique maximale.

Les matériaux pouzzolaniques les plus courants sont les cendres volantes (dimension de l'ordre d'une trentaine de microns). On peut distinguer des cendres silico-alumineuses provenant de la combustion de la houille et des cendres sulfo-calciques provenant de la combustion du lignite.

En pratique, la mise en oeuvre de l'effet pouzzolanique des cendres volontes peut être mis en oeuvre en ajoutant simultanément ces cendres et de la chaux à la boue à traiter.

La chaux peut également être déjà contenue (sous forme de Ca $(OH)_2$ dans la boue (boues de neutralisation ou précipitation contenant un excès de chaux).

Des procédés commerciaux mettant en oeuvre des réaction pouzzolaniques sont déjà connus d'ouvrages généraux comme R.B. POJASEK "Toxic and hazardous waste disposal" volume 1. Ann Arbor Science 1979 et U.S. E.P.A.,
"Survey of solidification/stabilization technology for hazardous industrial wastes" E.P.A.- 600/2-79-056 July 1979.

Ainsi le procédé POZ-O-TEC mis au point par la Société américaine I.U.C.S. utilise des cendres volantes et d'autres additifs. Deux réactions interviennent simultanément : une réaction rapide entre les sels solubles d'une part et la chaux et l'alumine présentes dans les cendres volantes et une réaction pouzzolanique beaucoup plus lente entre la silice et la chaux.

La boue immédiatement traitée se présente physiquement sous la forme d'un fluide visqueux pompable qu'on laissera durcir pendant plusieurs semaines sur son site de stockage.

Ce procédé a été mis au point pour traiter des boues provenant des eaux de lavage du SO des fumées de centrales thermiques, puis il a été utilisé pour solidifier des déchets liquides d'industries chimiques et de traitement de surfaces métalliques.

Dans le procédé Research-Cottrell (voir la ref. R.B. POJASEK ci-dessus) on utilise des variantes de ce procédé. La chaîne de traitement comporte un épaississeur gravitaire, une centrifugeuse pour déshydrater la boue, un convoyeur de cendres volantes, un convoyeur de chaux, et un mélangeur boue déshydratée/cendres volantes/chaux.

Dans le cas des boues résiduaires de traitement de surfaces métalliques, une centrifugeuse ou une bande presseuse donne un résidu qui contient encore environ 80 % en poids d'eau. Un filtre presse permet d'obtenir des résidus contenant encore environ 70 % d'eau.

Cette forte teneur en eau présente des inconvénients car il faut prévoir des quantités élevées de chaux et de pouzzolane pour obtenir une prise en masse et cela conduit à des masses et volumes importants de déchets solides à stocker.

De plus, le mélangeur du Procédé Research-Cottrell doit être puissant et robuste car sa fonction est de mélanger intimement un milieu épais constitué par les boues concentrées après centrifugation avec les cendres volantes et la chaux.

Parmi les procédés mettant en oeuvre des réactions pouzzolaniques on peut citer aussi celui décrit dans DE-A-2456225 s'appliquant à des boues concentrées en matières solides dont les quantités de réactifs utilisés ne conviennent pas dans le cas de boues peu concentrées.

Le but de l'invention est de proposer un procédé de traitement de boues peu concentrées (par exemple d'environ 3 à 20 % en poids de matière sèche par poids de boue), qui soit simple, ne faisant pas appel à un mélangeur puissant, tout en obtenant une élimination des polluants et métaux indésirables et une meilleure séparation entre la phase solide de la boue et sa phase liquide, c'est-à-dire de récupérer 35 à 40 % de la phase aqueuse de boue initiale. Cette phase aqueuse peut être recyclée ou soumise à un traitement d'épuration notamment par résines échangeuses d'ions.

Le but est atteint par le procédé suivant l'invention qui consiste en un procédé de fixation chimique de boue aqueuse liquide, par mise en oeuvre d'une réaction pouzzolanique, caractérisé en ce qu'il comprend successivement les étapes suivantes :

a) on règle si nécessaire le pH de la boue à une valeur supérieure à 9.

b) on mélange le produit obtenu à l'étape a) avec le matériau pouzzolanique et éventuellement de la chaux de façon à ce que le mélange homogène ainsi obtenu ait une teneur en matière sèche de la boue, hydroxyde de calcium, matériau pouzzolanique dans les rapports pondéraux hydroxyde de calcium/matière sèche compris entre 1 et 2 et matériau pouzzolanique/hydroxyde de calcium d'environ 2.

c) on effectue la déshydration mécanique de ce mélange homogène en séparant ainsi la phase solide de la phase liquide et

d) on récupère chacune de ces phases et laisse se solidifier la phase solide.

Dans le procédé suivant l'invention, par chaux il faut entendre indifféremment chaux vive CaO ou chaux éteinte $Ca(OH)_2$.

On appelle déshydration mécanique l'élimination plus ou moins complète de la phase liquide d'une boue par application d'un champ de force ou de pression, par exemple par filtration ou centrifugation.

Le procédé selon l'invention présente de nombreux avantages :

On effectue l'agitation sur un milieu aqueux dilué relativement fluide, ce qui permet d'obtenir plus rapidement une meilleure homogénéisation des solides (déchets, chaux, matériau pouzzolanique) dans la phase aqueuse que dans le procédé Research-Cottrell.

Le matériau pouzzolanique confère au mélange précédent une meilleure aptitude à la déshydratation notamment en rendant les gâteaux de filtration moins compressibles et plus perméables que ceux résultant de la filtration de la boue seule.

La phase solide recueillie qui contient les métaux indésirables se solidifie lentement en une sorte de pierre qui présente une bonne résistance à l'érosion et la lixiviation.

Enfin, ce procédé peut être mis en oeuvre sans autre modification d'une station d'épuration qu'une installation de stockage et de dosage du matériau pouzzolanique.

Outre les dispositions qui précèdent, l'invention comprend encore d'autres dispositions, qui ressortiront de la description qui va suivre qui se réfère à des exemples de mise en oeuvre du procédé de la présente invention et au dessin schématique annexé dans lequel :

la figure est une vue schématique d'une installation de mise en oeuvre du procédé selon l'invention.

## EXEMPLES D'ESSAIS DE TRAITEMENT DE BOUES

1° Définition des boues par leur composition

a) Première boue $V_1$.

Afin d'obtenir des essais comparables entre eux une première boue $U_1$ a été synthétisée. La boue $U_1$ s'obtient par neutralisation à la chaux éteinte d'une solution acide de sels métalliques.

La composition des phases solide et liquide de cette boue est rapporté dans le tableau 1.

EP 0 384 846 B1

Tableau 1

| Caractéristiques | | Phase solide . | Phase liquide .. |
|---|---|---|---|
| pH | | - | 9.48 |
| Résistivité ($\Delta$ .cm) | | - | 15 |
| Résidu à 110°C | | 303 450 | 7163 |
| Résidu à 550°C | | 256 260 | 4945 |
| Sulfates ($SO_4^-$) | | - | 150 |
| Chlorures ($Cl^-$) | | - | 2961 |
| Nitrates ($NO_3^-$) | | - | 254 |
| Métaux | Sodium | 510 | 307 |
| | Calcium | 91210 | 2299 |
| | Potassium | 127 | 6.75 |
| | Cadmium | 62 | 0.1 |
| | Chrome | 1750 | 57 |
| | Cuivre | 2460 | 0.058 |
| | Fer | 22140 | 0.133 |
| | Manganèse | 98 | 0.034 |
| | Nickel | 1360 | 0.22 |
| | Plomb | 239 | 0.35 |
| | Zinc | 23700 | 0.1875 |

. résultats exprimés en mg.kg de boue
.. résultats exprimés en mg.l de boue

Cette boue, d'une teneur en matière sèche d'environ 261 g par kg de boue (26 % de matière solide sèche), a été diluée à 6 % par ajout d'eau pour donner la boue $V_1$.

c) deuxième boue $V_2$.

Il s'agit d'une boue résiduaire d'industrie de traitement de surfaces métalliques (chromage et nickelage de pièces pour la fabrication de cycles) issue d'une filière de traitement des effluents comportant successivement :
- une réduction chimique des chromates par addition de bisulfite de sodium en milieu acide,
- une neutralisation à la chaux vive jusqu'à pH voisin de 10, à raison de 14,1 g de chaux/kg d'effluent.
Les caractéristiques essentielles de cette boue sont les suivantes :

| pH du liquide de suspension | 9,8 |
|---|---|
| résidu sec à 110°C | 60,7 g/kg |

concentration en éléments métalliques des sels ionisables (mg par kg de matière sèche) :

4

| Sodium | 8518 |
|---|---|
| Calcium | 6175 |
| Chrome trivalent | 980 |
| Fer | 192 |
| Nickel | 1310 |

2° Nature des matériaux pouzzolaniques utilisés.

Différents matériaux pouzzolaniques ont été sélectionnés.

Ces matériaux sont désignés ci-après sous la référence respective A, B, C, D, E.

A est une fumée de silice commercialisée par la Société française SOFREM ;

B est une silice thermique commerciale ayant la composition suivante :

| Analyses chimiques : | | |
|---|---|---|
| $ZrO_2$ | 1,3 % | Humidité 0,22 à 100°C Perte au Feu (hors $H_2O$) 0,3 % entre 100 et 1000°C pH d'une suspension aqueuse à 4 % : 4,4 |
| $Al_2O_3$ | 3,4 % | |
| $Fe_2O_3$ | 0,2 % | |
| $Na_2O$ | 0,2 % | |
| CaO | 0,04 % | |
| C | 0,07 % | |
| $K_2O$ | 0,06 % | |
| $SO_3$ | 0,006 % | |
| $SiO_2$ | 94 % | |

Propriétés physiques :

Masse volumique théorique 2,2 g/cm$^3$

Masse volumique apparente (non tassée) 0,24 g/cm$^3$

Surface spécifique (B.E.T.) 14 m$^2$/g

Dimensions 90 % inférieur à 2 $\mu$m

80 % inférieur à 1 $\mu$m

10 % inférieur à 0,2 $\mu$m

$\emptyset_{50}$ = 0,55 $\mu$m

Cette silice thermique consiste essentiellement en microsphères de silice vitreuse.

C est une pouzzolane commercialisée par la Société TUBAG

D est une pouzzolane d'origine naturelle en provenance de VOLVIC (France)

E est un matériau à base de silice, se présentant sous forme de gisements importants de déchets de l'industrie du verre obtenus sous forme de résidu du procédé ancien de doucissage du verre.

Analyses chimiques (poids %)

90 % de $SiO_2$ au moins.

1,5 % de $Na_2O$ sous sa forme hydratée

0,02 % de matières organiques carbonées

Le reste étant du $Fe_2O_3$

La granulométrie de cette poudre est inférieure à 5$\mu$m.

L'utilisation de ce matériau E jusqu'alors inutilisé présente un grand intérêt économique par rapport à l'utilisation des matériaux pouzzolaniques commercialisés qui sont en général relativement coûteux

I. Exemples de mise en oeuvre du procédé suivant l'invention dans le traitement de la boue synthétique $v_1$

Le bilan est rapporté dans chaque essai à 1 kg de boue brute $v_1$.

Les essais 1 à 6 sont des essais témoins.

Les essais 7 à 22 sont des essais d'après le procédé selon l'invention.

A 1 kg de boue $v_1$ on ajoute chaque fois soit 60 g soit 120 g de chaux vive CaO et une quantité double du matériau pouzzolanique A, B, C ou E. Puis le mélange est homogénisée par agitation avant d'être soumis à une filtration sous pression de 196 ou 392 kPa.

Comme rapporté au tableau 2 pour chaque essai on mesure la masse du filtrat, la masse du déchet final ainsi que son volume.

<u>Tableau 2</u>

| Essai n° | Quantité de réactif utilisés (grammes) | | Pression de filtration (kg/cm²) | Masse de filtrat (grammes) | Masse de déchet final solidifié (grammes) | Volume de déchet final (cm³) |
|---|---|---|---|---|---|---|
| | chaux vive | pouzzolane | | | | |
| 1 | 0 | 0 | 2 | 878 | 122 | 91 |
| 2 | 0 | 0 | 4 | 890 | 110 | 82.5 |
| 3 | 120 | 0 | 2 | 790 | 330 | 301 |
| 4 | 60 | 0 | 2 | 894 | 166 | 153 |
| 5 | 120 | 0 | 4 | 810 | 310 | 285 |
| 6 | 60 | 0 | 4 | 920 | 140 | 141 |
| 7 | 120 | A : 240 | 2 | 500 | 860 | 712 |
| 8 | 60 | A : 120 | 2 | 645 | 535 | 433 |
| 9 | 120 | A : 240 | 4 | 520 | 840 | 606 |
| 10 | 60 | A : 120 | 4 | 680 | 500 | 414 |
| 11 | 120 | B : 240 | 2 | 575 | 785 | 539 |
| 12 | 60 | B : 120 | 2 | 745 | 435 | 298 |
| 13 | 120 | B : 240 | 4 | 595 | 765 | 500 |
| 14 | 60 | B : 120 | 4 | 765 | 415 | 279 |
| 15 | 120 | C : 240 | 2 | 690 | 670 | 452 |
| 16 | 60 | C : 120 | 2 | 800 | 380 | 269 |
| 17 | 120 | C : 240 | 4 | 722 | 638 | 404 |
| 18 | 60 | C : 120 | 4 | 810 | 370 | 250 |
| 19 | 120 | E : 240 | 2 | 665 | 695 | 481 |
| 20 | 60 | E : 120 | 2 | 775 | 405 | 279 |
| 21 | 120 | E : 240 | 4 | 700 | 660 | 443 |
| 22 | 60 | E : 120 | 4 | 790 | 390 | 260 |

6

Les résultats obtenus dans ces essais montrent l'effet favorable de la pression de filtration qui diminue la masse de déchet solide final et augmente le volume de filtrat obtenu, la masse de déchet final décroissant dans l'ordre des matériaux A, B, E, C.

D'autres essais rapportés ci-après montrent l'influence favorable des matériaux pouzzolaniques ajoutés à la boue $V_1$ sur la filtrabilité de celle-ci.

La filtrabilité d'une boue peut être caractérisée par les paramètres suivants :

1° La résistance spécifique à la filtration : $\alpha$

2° Le coefficient de compressibilité du gâteau : S

3° La siccité-limite du gâteau : sl

Ces paramètres ont été décrits dans la publication de l'AFNOR T97-001 de Novembre 1979 (pages 1 à 14) ayant pour titre : Norme expérimentale -Essais des boues- Détermination des caractéristiques en liaison avec l'aptitude à la concentration.

$\alpha$ est défini comme la résistance spécifique à la filtration de la suspension filtrée. Il est indépendant de la concentration de celle-ci, mais dépend essentiellement de la taille, de la forme et du degré d'agglomération des particules solides constitutives du gâteau de filtration.

Le tableau 3 montre les résistances spécifiques obtenues par ajouts de chaux et de matériaux pouzzolaniques à la boue $v_1$ en comparaison à celle de la boue $v_1$ seule.

De l'examen de ce tableau on voit que les matériaux pouzzolaniques C et D améliorent la filtrabilité.

## Tableau 3

| Formule | Pression | Pente de la droite t/V=f(V) | Coefficient de correlation | Résistance spécifique $\alpha$ en m/kg |
|---|---|---|---|---|
| Boue - | 0.5 | 0.215 | 0.999 | $1.37 \cdot 10^8$ |
| | 2 | 0.0895 | 0.999 | $2.29 \cdot 10^8$ |
| CaO - | 4 | 0.0611 | 0.999 | $3.12 \cdot 10^8$ |
| A | 7 | 0.0483 | 0.999 | $4.33 \cdot 10^8$ |
| Boue - | 0.5 | 0.158 | 0.999 | $1.01 \cdot 10^8$ |
| | 2 | 0.0715 | 0.999 | $1.83 \cdot 10^8$ |
| CaO - | 4 | 0.0478 | 0.999 | $2.44 \cdot 10^8$ |
| B | 7 | 0.0321 | 0.999 | $2.98 \cdot 10^8$ |
| Boue - | 0.5 | 0.0452 | 0.999 | $2.17 \cdot 10^7$ |
| | 2 | 0.0197 | 0.999 | $5.04 \cdot 10^7$ |
| CaO - | 4 | 0.0132 | 0.998 | $6.76 \cdot 10^7$ |
| C | 7 | 0.0108 | 0.999 | $9.59 \cdot 10^7$ |
| Boue - | 0.5 | 0.121 | 0.999 | $7.74 \cdot 10^7$ |
| | 2 | 0.0320 | 0.999 | $8.19 \cdot 10^7$ |
| CaO - | 4 | 0.0206 | 0.997 | $1.053 \cdot 10^8$ |
| D | 7 | 0.0139 | 0.996 | $1.24 \cdot 10^8$ |
| Boue seule (témoin) | 0.5 | 0.0611 | 0.999 | $9.49 \cdot 10^7$ |
| | 2 | 0.0299 | 0.999 | $1.86 \cdot 10^8$ |
| | 4 | 0.0224 | 0.999 | $2.78 \cdot 10^8$ |
| | 7 | 0.0191 | 0.998 | $4.15 \cdot 10^8$ |

Le tableau 4 montre que l'addition des réactifs pouzzolaniques provoque une diminution très importante de S.

EP 0 384 846 B1

Tableau 4

| Formulation | Facteur de corrélation | Coefficient de compressibilité S |
|---|---|---|
| Boue + Ca O + A | 0.994 | 0.427 |
| Boue + Ca O + B | 0.998 | 0.403 |
| Boue + Ca O + C | 0.998 | 0.556 |
| Boue + Ca O + D | 0.913 | 0.177 |
| Boue | 0.998 | 0.712 |

Le tableau 5 montre les siccités limites obtenues par ajouts de matériaux pouzzolaniques en comparaison avec la boue $v_1$ seule.

Tableau 5

| Formule | Pression en kg/cm$^2$ | | |
|---|---|---|---|
| | 2 | 4 | 7 |
| Boue + CaO + A | 44,5 % | 49,5 % | 53 % |
| Boue + Ca O + B | 47,8 % | 51,9 % | 55,5 % |
| Boue + CaO + C | 50,7 % | 54,9 % | 57,8 % |
| Boue + Ca O + D | 54 % | 60,1 % | 61,6 % |
| Boue seule (temoin) | 33 % | 36,9 % | 40,8 % |

Les résultats précédents consignés dans les tableaux 2 à 5 montrent que les matériaux pouzzolaniques améliorent la filtrabilité de la boue synthétique $v_1$.

D'autres essais rapportés ci-après dans le tableau 6 montrent les résultats obtenus en matière de solidification des gâteaux obtenus par les essais n° 1 à 22 figurant dans le tableau 2.

Mode opératoire :

Immédiatement après la filtration on prélève des éprouvettes de forme cylindrique (diamètre 3,5 cm, hauteur 5,5 cm) des différents gâteaux de filtration et on laisse la solidification s'effectuer pendant 28 jours pour un premier lot et 6 mois pour un second lot. Les éprouvettes sont mises alors dans de l'eau sans agitation et l'on observe leur aspect jusqu'à 15 heures après leur immersion.

Les résultats sont résumés dans le tableau 6 ci-après avec le code suivant :

O : éclatement immédiat ou à très court terme du matériau immergé dans l'eau ;
+ : délitage total du matériau au terme de 15 heures ;
+ + : délitage partiel du matériau, obtention à l'état final de fragments de petite taille (<15 mm);
+ + + : délitage partiel, obtention à l'état final de fragments de grosse taille (>15 mm);
+ + + + : fissuration du matériau ;
+ + + + + : état physique inchangé
+ + + + + + : incassable manuellement.

9

Tableau 6

| Essai n° | Observations à 28 jours | Observations à 6 mois |
|----------|--------------------------|------------------------|
| 1 | + + + + | + + + |
| 2 | + + + + | + + + |
| 3 | + + + + | + + + |
| 4 | + + + + | + + + |
| 5 | + + + + | + + |
| 6 | + + + + + | + + + |
| 7 | + + + + | + + + + + + |
| 8 | + + + + | + + + + |
| 9 | + + + + | + + + + + |
| 10 | + + + + | + + + |
| 11 | + + + | + + + + |
| 12 | + + + | + + + |
| 13 | + + | + + + + + + |
| 14 | + + + | + + + + |
| 15 | + + + + + | + + + + + + |
| 16 | + + + + + | + + + + |
| 17 | + + + + + | + + + + + + |
| 18 | + + + + + | + + + + + |
| 19 | + + + + + | + + + + + + |
| 20 | + + + + + | + + + + + |
| 21 | + + + + + | + + + + + + |
| 22 | + + + + + | + + + + + |

Le tableau 6 montre que la tenue des matériaux traités selon le procédé de l'invention est de façon générale bien meilleure que celle de la boue seule ou de la boue conditionnée uniquement à la chaux.

D'autres essais (tests de lixiviation) ont montrés en matière de rétention des polluants, qu'après un mûrissement de 6 mois, les métaux suivants : Cr, Ni, Cu, Fe, Cd, Mn n'étaient plus détectés dans les phases aqueuses (lixiviats) obtenues en mettant en contact sans agitation pendant 15 heures, 100 g de gâteau solidifé avec 1 litre d'eau.

II Exemple de mise en oeuvre du procédé suivant l'invention dans le traitement de la boue $v_2$ .

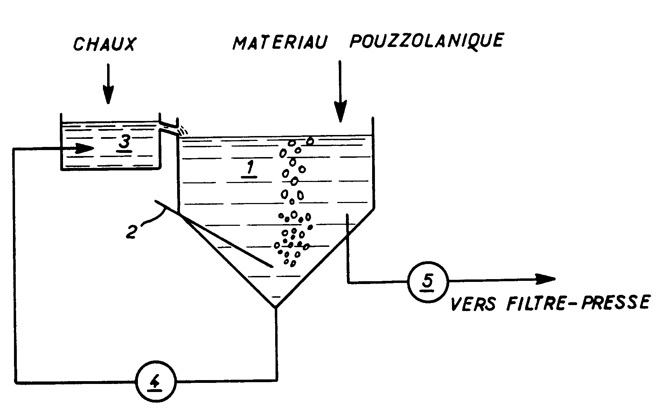

La figure 1 montre une vue schématique d'une installation de mise en oeuvre du procédé selon l'invention.

On transfère la boue $v_2$ dans une cuve cylindro-conique 1 d'environ 20 m$^3$ et on l'agite par insufflation d'air par une canne plongeante 2. Un bac à réactif 3 d'environ 300 l situé en position amont par rapport à la cuve 1 permet l'addition de la chaux.

Ce bac 3 est alimenté par de la boue issue de la cuve 1 par pompage permanent à l'aide de la pompe de recyclage 4.

Ce bac 3 déborde dans la cuve 1 et il se trouve rempli de la même boue $v_2$, dont la masse est agité par le courant traversier provoqué par la pompe 4.

Le procédé comprend les étapes suivantes :

a) on ajoute un excès de chaux vive pulvérulente dans le bac à réactif à raison de 11 g de chaux par kg de boue brute. Au bout de quelques minutes la chaux introduite se trouve intégralement mélangée à toute la masse de boue liquide présente dans l'installation. Le pH mesuré est de 12,7.

b) on ajoute directement dans la cuve cylindro-conique 1 le matériau pouzzolanique choisi (Silice thermique B dans le cas présent) à raison de 11 g par kg de boue initiale;

c) on maintient l'agitation dans la cuve 1 pendant 10 à 15 minutes. On dirige le mélange vers le filtre-presse (non représenté) à l'aide de la pompe 5 ;

d) on envoie le mélange sur un filtre-presse à plateaux (plateaux 60 x 60cm) et l'on réalise des pressées en discontinu sous 4 kg/cm$^2$ ;

c) les gâteaux de filtration sont recueillis pour être mis en dépôt définitif ou en décharge avec compaction éventuelle.

Des échantillons sont également prélevés.

Au bout de 28 jours les échantillons cylindriques (diamètre 3,5 cm, hauteur 5,5 cm) sont d'une consistance très dure et incassables manuellement. Un test de lixiviation pratiqué sans agitation dans les mêmes conditions que pour la boue $v_1$ montre les avantages du procédé selon l'invention par rapport à un simple chaulage (Tableau 7).

Tableau 7:

boue $v_2$ :  lixiavibilité des polluants après traitement. Quantités solubilisées lors d'un test de lixiviation, en mg par kg de matériau traité.

## Tableau 7

| Traitement subi / Espèces chimiques considérées | Chaulage | Traitement (chaux + pouzzolane) |
|---|---|---|
| Salinité totale | 10 240 | 7 880 |
| Sulfates | 4 390 | 2 800 |
| Sodium | 3 100 | 2 100 |
| Calcium | 700 | 310 |
| Chrome trivalent | 220 | 80 |
| Fer | $< 1$ | $< 1$ |
| Nickel | $< 0,5$ | $< 0,5$ |
| pH du lixiviat | 11,6 | 6,0 |

**Revendications**

1. Procédé de fixation chimique de boues aqueuses liquides présentant une teneur en matière sèche comprise entre 3 et 20 % en poids en vue d'en éliminer les polluants et les métaux indésirables, procédé mettant en oeuvre une réaction pouzzolanique, caractérisé en ce que :

   a) on règle si nécessaire le pH de la boue à une valeur supérieure à 9 ;

   b) on mélange le produit résultant de (a) avec de la chaux et un matériau pouzzolanique pour obtenir un mélange homogène ayant une teneur en matière sèche de la boue, hydroxyde de calcium, matériau pouzzolanique dans les rapports pondéraux hydroxyde de calcium/matière sèche compris entre 1 et 2 et matériau pouzzolanique/hydroxyde de calcium d'environ 2 ;

   c) on sépare la phase solide de la phase liquide par déshydratation mécanique de ce mélange homogène ;

   d) on recueille la phase liquide d'une part et la phase solide d'autre part et on laisse cette dernière se solidifier naturellement.

**2.** Procédé selon la revendication 1, caractérisé en ce que le matériau pouzzolanique est choisi parmi les fumées de silice, les silices thermiques consistant essentiellement en microsphères de silice vitreuse, les pouzzolanes d'origine naturelle ou synthétique, les résidus du doucissage du verre à base de silice.

**Claims**

**1.** Process for the chemical fixation of liquid aqueous sludges with a dry matter content of between 3 and 20% by weight for the purpose of eliminating pollutants and undesirable metals therefrom, a process using a pozzuolanic reaction, characterised in that:

a) the pH of the sludge is, if necessary, adjusted to a value higher than 9;

b) the product resulting from (a) is mixed with lime and a pozzuolanic material in order to obtain a homogeneous mixture having a dry matter content of sludge, calcium hydroxide and pozzuolanic material in the ratios by weight of calcium hydroxide/dry matter of between 1 and 2 and pozzuolanic material/calcium hydroxide of approximately 2;

c) the solid phase is separated from the liquid phase by mechanical dehydration of this homogeneous mixture;

d) the liquid phase on the one hand and the solid phase on the other hand are collected and the latter is left to solidify naturally.

**2.** Process according to claim 1, characterised in that the pozzuolanic material is chosen from amongst silica fumes, thermal silicas consisting essentially of vitreous silica microspheres, pozzuolanas of natural or synthetic origin and residues from the polishing of silica-based glass.

**Patentansprüche**

**1.** Verfahren zur chemischen Fixierung von flüssigen wässrigen Schlämmen mit einem Trockensubstanzgehalt von 3 bis 20 Gew -% zum Zweck der Entfernung der Verunreinigungen und der unerwünschten Metalle aus ihnen, Verfahren, das eine Puzzolanreaktion verwendet, dadurch gekennzeichnet, daß:

a) man das pH des Schlamms nötigenfalls auf einen Wert von über 9 einstellt,

b) man das sich aus a) ergebende Produkt mit Kalk und einem Puzzolanmaterial mischt, um eine homgene Mischung zu erhalten, die einen Gehalt an Trockensubstanz des Schlamms, Kalziumhydroxid, Puzzolanmaterial in Gewichtsverhältnissen Kalziumhydroxid/Trockensubstanz zwischen 1 und 2 und Puzzolanmaterial/Kalziumhydroxid von etwa 2 hat;

c) man die feste Phase von der flüssigen Phase durch mechanische Dehydratisierung dieser homogenen Mischung trennt;

d) man die flüssige Phase einerseits und die feste Phase andererseits gewinnt und man letztere von selbst sich verfestigen läßt.

**2.** Verfahren nach Anspruch 1, dadurch gekennzeichnet, daß das Puzzolanmaterial ausgewählt ist aus den Kieselerdedampfen, den thermischen Kieselerden, die im wesentlichen aus Quarzglasmikrokugeln bestehen, den Puzzolanen natürlichen oder synthetischen Ursprungs, den Rückständen des Glasschleifens auf Kieselerdebasis.

CHAUX

MATERIAU POUZZOLANIQUE

VERS FILTRE-PRESSE